# EUROPEAN PATENT APPLICATION

(11) **EP 1 575 285 A2**
(43) Date of publication of application: **14.09.2005**
(21) Application number: 05005040.0
(22) Date of filing: 08.03.2005
(51) Int. Cl.: H04N 5/76

(54) **Channel switching method in broadcast recorder**

(30) Priority: 09.03.2004 KR 2004015883
(71) Applicant: Humax Co., Ltd., Kyonggi-Do 449-080 (KR)
(72) Inventor: Kang, Moon Sung, Gangnam-gu Seoul 135-280 (KR)
(74) Representative: TER MEER - STEINMEISTER & PARTNER GbR

(57) **Abstract**

A channel switching method in a broadcast recorder integrating a set-top box and a hard disk recorder. At the request of the user, channels tuned to by a secondary tuner (27) are switched and other broadcast programs received therethrough are output, while a broadcast program being received through a primary tuner (20) is recorded on a recording medium (26). If the channel recorded on the medium (26) is identical to the channel to which the user has requested channel switching, a time shift operation is performed to reproduce the stored broadcast program while storing the broadcast program being received through the primary tuner (20). Accordingly, if the user desires to return to a channel providing a desired program when viewing programs of other channels, the user can easily resume viewing the desired program, without missing any part of the desired program, which has been received while the user views the programs of the other channels.

## Description

### BACKGROUND OF THE INVENTION

### Field of the Invention

The present invention relates to a channel switching method in a broadcast recorder, and more particularly to a channel switching method in a broadcast recorder, whereby if the user desires to return to a channel providing a desired broadcast program when viewing broadcast programs of other channels, the user can easily resume viewing of the desired broadcast program, without missing any part of the desired broadcast program, which has been received while the user views the broadcast programs of the other channels.

### Description of the Related Art

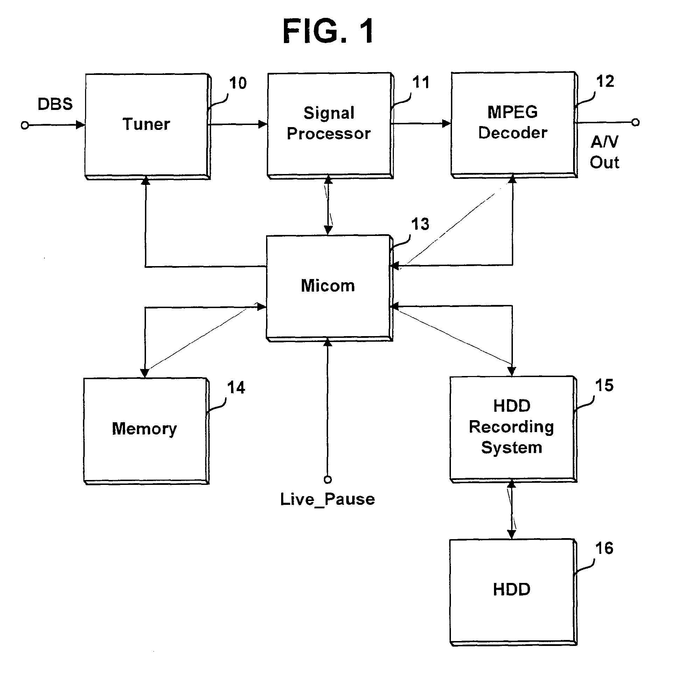

Broadcast recorders, which incorporate a recorder such as a hard disk recorder into a broadcast receiver such as a set-top box and are capable of easily recording broadcast programs, have been commercialized recently. As shown in Fig. 1, the broadcast recorder may comprise a tuner 10, a signal processor 11, an MPEG decoder 12, a microcomputer 13, a memory 14, an HDD recording system 15, and a hard disk 16.

The tuner 10 is tuned to a broadcast channel requested by the user, and receives a broadcast signal provided through the broadcast channel. The signal processor 11 processes the broadcast signal to convert it into audio and video signals. The MPEG decoder 12 decodes the audio and video signals into the original audio and video signals, and outputs them to an externally connected device such as a television.

At the request of the user, the microcomputer 13 performs a broadcast reception operation by controlling the tuner 10, the signal processor 11, and the MPEG decoder 12 to receive a broadcast program, and performs a broadcast recording operation by controlling the HDD recording system 15 to record the received broadcast program in the hard disk 16.

When the user presses a preset button, for example, a live pause button provided on a remote controller, while a broadcast program of a certain channel is received through the tuner 10, the microcomputer 23 displays a still image of the broadcast program on the screen of the television, while controlling the HDD recording system 15 to store the broadcast program on the hard disk 16.

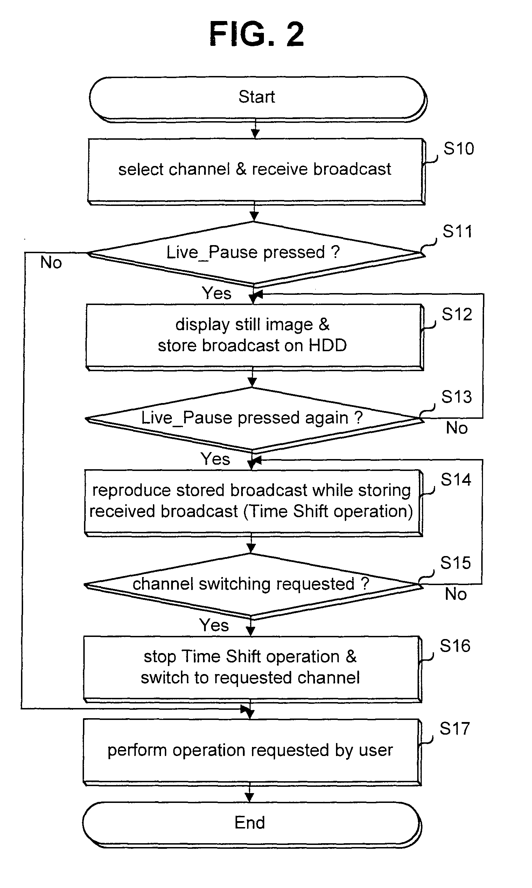

Fig. 2 is a flow chart of a conventional method for performing a live pause operation in the conventional broadcast recorder, which is described below in detail.

As described above, the microcomputer 13 controls the tuner 10, the signal processor 11, and the MPEG decoder 12 to tune in to a broadcast channel desired by the user and display a broadcast program received over the tuned broadcast channel on the television (S10).

If the user presses the live pause button while performing the broadcast reception operation (S11), the microcomputer 13 controls the HDD recording system 15 to record the broadcast program received in real time through the tuner 10 on the hard disk 16 while repeatedly outputting the same image of the broadcast program as that output at the moment when the live pause button was pressed, so that a corresponding still image is displayed on the screen of the television (S12).

If the user again presses the live pause button (S13), the microcomputer 13 performs a time-shift operation in such a manner that it reads and reproduces the broadcast program, which has been recorded on the hard disk 16, while continually recording data of the broadcast program being received in real time through the tuner 10 on the hard disk 16 (S14).

If the user presses a different button, for example, if the user requests channel switching to a different broadcast channel (S15), the microcomputer 13 stops the time-shift operation and controls the tuner 10 to tune in to the different broadcast channel requested by the user (S16), and the microcomputer 13 performs operations corresponding to the request of the user (S17) .

When the user wishes to be temporarily away while viewing a broadcast program, the user can easily record the broadcast program received while away by pressing the live pause button provided on the remote controller. Also, the user can simply activate the time-shift operation by again pressing the live pause button, so that the user can view the entirety of the broadcast program, which has been received in real time, with a certain time lag.

However, in the conventional broadcast recorder configured as described above, if the user wishes to temporarily check other broadcast programs received through other channels while viewing one broadcast program through one channel, the user cannot tune in to the other channels and view the other broadcast programs while storing the one broadcast program being received through the one channel, which the user has viewed, on the hard disk. There is an urgent need to provide an effective solution to this problem.

### SUMMARY OF THE INVENTION

Therefore, the present invention has been made in view of the above problem, and it is an object of the present invention to provide a channel switching method in a broadcast recorder, wherein if the user wishes to temporarily check other broadcast programs received through other channels while viewing one broadcast program through one channel, the user can freely tune in to the other channels and view the other broadcast programs while storing the one broadcast program being received through the one channel, so that the user can resume viewing of the one broadcast program when returning to the one broadcast channel, without missing any part of the one broadcast program, which has been received while the user views the other broadcast programs.

In accordance with the present invention, the above and other objects can be accomplished by the provision of a method for switching channels in a broadcast recorder, the method comprising storing a first broadcast program on a recording medium if a preset button is selected while the first broadcast program is received through a first channel; when channel switching to a second channel is requested, receiving and outputting a second broadcast program of the second channel while continuing to store the first broadcast program on the recording medium; and if the first and second channels are identical, reproducing the first broadcast program stored on the recording medium while continuing to store the first broadcast program being received through the first channel on the recording medium.

When the preset button is selected to store the first broadcast program, the channel number and the playback start position of the first broadcast program is stored and managed in a memory, and the same image of the first broadcast program as that output at the moment when the preset button is selected is repeatedly output as a still image.

In order to compare the second channel with a channel number indicated by the channel number information managed in the memory, it is determined whether or not the first and second channels are identical. The first broadcast program stored in the recording medium is reproduced, starting from a position of the recording medium indicated by the playback start position information managed in the memory, and the playback start position information is continually updated during the reproduction of the first broadcast program stored in the recording medium.

If the preset button to turn the recording operation of the first broadcast program on is implemented as a channel up/down button, the channel switching request is performed using the preset button or using a favorite channel button used to tune in to preset favorite channels, and the recording of the first broadcast program on the recording medium is stopped when a button, other than the preset and favorite channel buttons, is selected.

If the preset button is toggled to turn the recording operation of the first broadcast program on and off, the channel switching request is performed using a general channel up/down button or using a favorite channel button used to tune in to preset favorite channels.

### BRIEF DESCRIPTION OF THE DRAWINGS

The above and other objects, features and other advantages of the present invention will be more clearly understood from the following detailed description taken in conjunction with the accompanying drawings, in which:
Fig. 1 is a block diagram of a conventional broadcast recorder;
Fig. 2 is a flow chart of a conventional method for performing a live pause operation in the conventional broadcast recorder;
Fig. 3 is a block diagram of a broadcast recorder to which the present invention is applied;
Fig. 4 is a schematic diagram illustrating a remote controller, on which live-pause channel up and down buttons are provided, according to the present invention;
Fig. 5 is a flow chart of a channel switching method in a broadcast recorder according to the present invention; and
Fig. 6 is a schematic diagram illustrating another embodiment of a remote controller, on which a live-pause button is provided, according to the present invention.

### DETAILED DESCRIPTION OF PREFFERRED EMBODIMENTS

Preferred embodiments of a channel switching method in a broadcast recorder according to the present invention will now be described in detail with reference to the accompanying drawings.

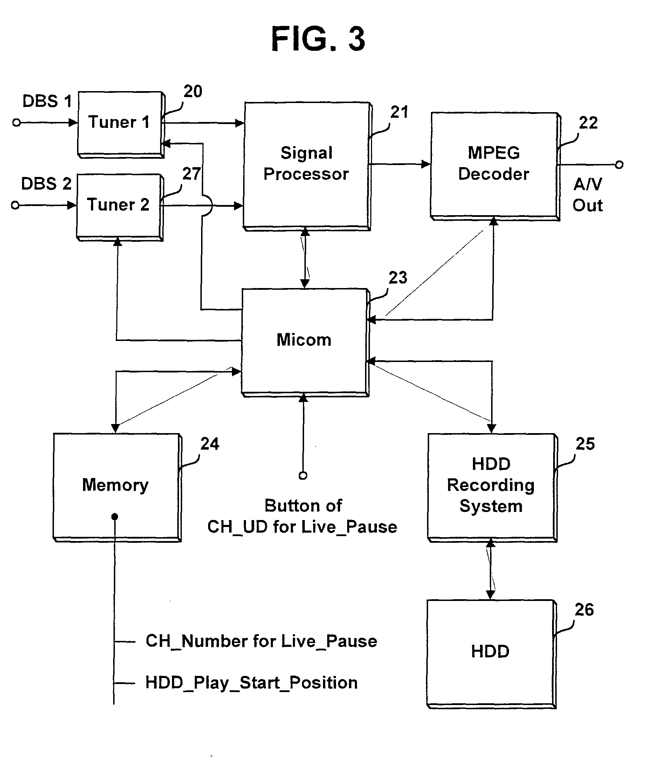

The present invention can be applied to various types of broadcast recorders. For example, the present invention can be applied to a broadcast recorder integrating a set-top box and a hard disk recorder. As shown in Fig. 3, the broadcast recorder, to which the present invention is applied, includes a signal processor 21, an MPEG decoder 22, a microcomputer 23, a memory 24, an HDD recording system 25, and a hard disk 26. The broadcast recorder further includes a first tuner 20 and a second tuner 27.

The first and second tuners 20 and 27 are individually controlled by the microcomputer 23 to be tuned to different broadcast channels. At the request of the user, the microcomputer 23 performs a broadcast reception operation by controlling the first and second tuners 20 and 27, the signal processor 21, and the MPEG decoder 22 to receive a broadcast program, and performs a broadcast recording operation by controlling the HDD recording system 25 to record the received broadcast program in the hard disk 26.

When the user presses a preset button, for example, live-pause channel up and down buttons "CH_UD for Live_Pause", which are newly defined in the present invention, while a broadcast program of a certain channel is received through the first tuner 20, the microcomputer 23 controls the second tuner 27 to tune in to a different broadcast channel and output its channel signals to a television, while controlling the HDD recording system 25 to store the broadcast program being received through the first tuner 20 on the hard disk 26.

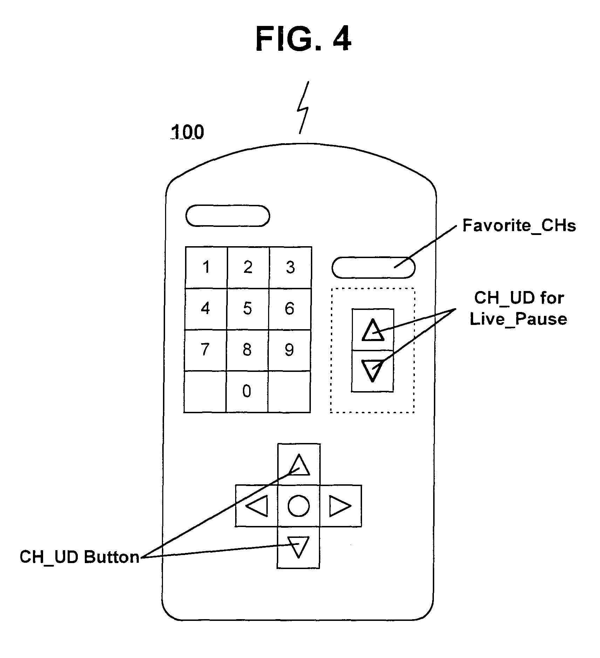

For example, the live-pause channel up and down buttons may be provided separately from general channel up and down buttons on a remote controller 100 as shown in Fig. 4, or may also be provided on a front panel of the broadcast recorder. The user can sequentially tune in to one or more favorite channels through the second tuner 27 by pressing a favorite channel button "Favorite_CHs" provided on the remote controller 100 after the live-pause channel up or down button is pressed. Also, the user can press the live-pause channel up or down button to switch broadcast channels, which are tuned to by the second tuner 27 for display on the television.

If the broadcast channel, to which the user has tuned the second tuner 27 using the live pause channel up and down buttons or the favorite channel button, is identical to the broadcast channel, which has been tuned to by the first tuner 20, the microcomputer 23 performs a time-shift operation in such a manner that it reads and reproduces the broadcast program, which has been recorded on the hard disk 26, while recording data of the broadcast program being received in real time through the first tuner 20 on the hard disk 26. This allows the user to continuously view the broadcast program being received in real time through the first tuner 20 with a certain time lag but without missing any part of the broadcast program, which has been received through the first tuner 20 while the user switches broadcast channels received through the second tuner 27, which is described below in detail.

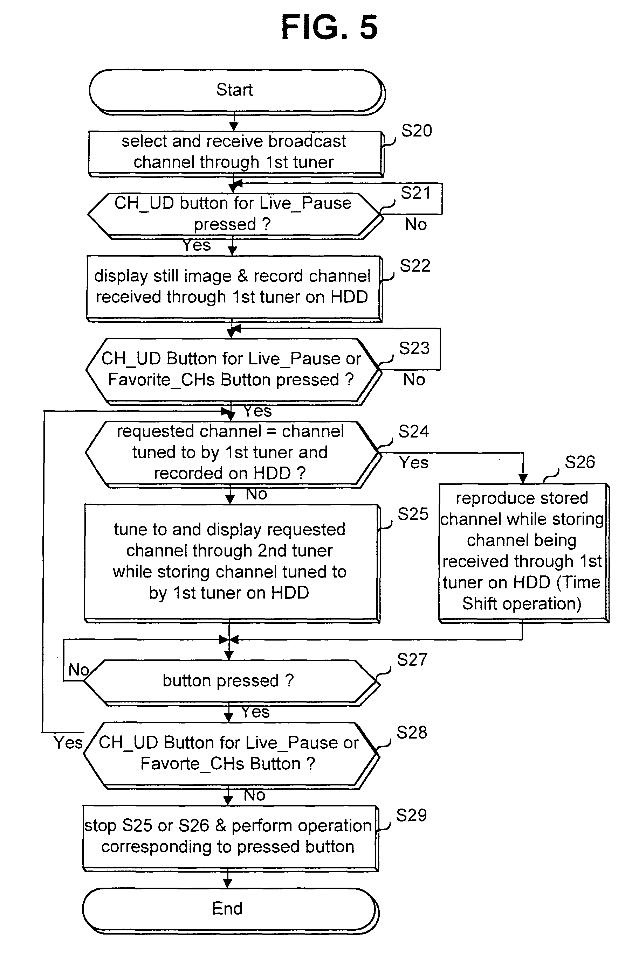

Fig. 5 is a flow chart of a channel switching method in a broadcast recorder according to the present invention.

The microcomputer 23 controls the first tuner 20, the signal processor 21, and the MPEG decoder 22 to tune in to a broadcast channel desired by the user and display a broadcast program received over the tuned broadcast channel on the television (S20).

While performing the broadcast reception operation, the microcomputer 23 determines whether or not the live-pause channel up or down button shown in Fig. 4 is selected by the user (S21). If the live-pause channel up or down button is selected, the microcomputer 23 controls the HDD recording system 25 to record the broadcast program received in real time through the first tuner 20 on the hard disk 26 while repeatedly outputting the same image of the broadcast program as that output at the moment when the live-pause channel up or down button was selected, so that a corresponding still image is displayed on the screen of the television (S22). Instead of repeatedly outputting the still image, the microcomputer 23 may control the second tuner 27 to tune in to a broadcast channel according to the live-pause channel up or down button pressed by the user, and display a broadcast program of the tuned broadcast channel on the television. Here, the microcomputer 23 records and manages, in the memory 24, live-pause broadcast channel number information "CH_Number for Live_Pause", which indicates the channel number of the broadcast channel received through the first tuner 20, and playback start position information "HDD_Play_Start_Position" of the broadcast program stored on the hard disk 26, which indicates a position of the hard disk 26, from which playback of the stored broadcast program is to be started.

Then, the microcomputer 23 determines whether or not the user has pressed the live-pause channel up or down button or the favorite channel button provided on the remote controller 100 to request channel switching to a broadcast channel, which is tuned to by the second tuner 27 for display on the television (S23). If the live-pause channel up or down button or the favorite channel button is pressed by the user, the microcomputer 23 determines whether or not the broadcast channel to which the user has requested channel switching (i.e., the broadcast channel to be tuned to by the second tuner 27) is identical to record the broadcast channel tuned to by the first tuner 20 and recorded in the hard disk 26 at step S22 (i.e., identical to the broadcast channel indicated by the live-pause broadcast channel number information managed in the memory 24) (S24).

If the two broadcast channels are not identical at step S24, the microcomputer 23 controls the second tuner 27 to tune in to the broadcast channel, to which the user has requested channel switching, so that the tuned broadcast channel is displayed on the television, while controlling the HDD recording system 25 to record the broadcast program received in real time through the first tuner 20 on the hard disk 26 (S25).

For example, if the user selects the favorite channel button "Favorite_CHs" provided on the remote controller 100, the microcomputer 23 reads favorite channel information previously stored in the memory 24, and controls the second tuner 27 to sequentially tune in to the read favorite channels. Here, the microcomputer 23 may control the second tuner 27 to sequentially tune in to the favorite channels each time the user presses the favorite channel button. Alternatively, the microcomputer may control the second tuner 27 to sequentially tune in to the favorite channels, the information of which is previously stored in the memory 24, at predetermined time intervals if the user presses the favorite channel button once. Of course, the user can tune in to any desired channel by manipulating the live-pause channel up and down buttons.

On the other hand, if the two broadcast channels are identical at step S24, the microcomputer 23 performs a time-shift operation in such a manner that it reads and reproduces the broadcast program, which has been recorded on the hard disk 26, with reference to playback start position information managed in the memory 24, while recording data of the broadcast program being received in real time through the first tuner 20 on the hard disk 26 (S26). The microcomputer 23 updates the playback start position information while performing the time-shift operation, and records and manages the updated playback start position information in the memory 24 if the time-shift operation is terminated.

The microcomputer 23 determines whether or not any button provided on the remote controller 100 or on the broadcast recorder is selected (S27). If a button is selected, the microcomputer 23 determines whether or not the selected button is the live-pause channel up or down button or the favorite channel button (S28).

If it is determined at step S28 that the selected button is the live-pause channel up or down button or the favorite channel button, the operation of step S25 or S26 is repeated.

On the other hand, if it is determined at step S28 that the selected button is a button other than the live-pause channel up and down buttons and the favorite channel button, the operation of step S25 or S26 is stopped and an operation corresponding to the selected button is performed (S29).

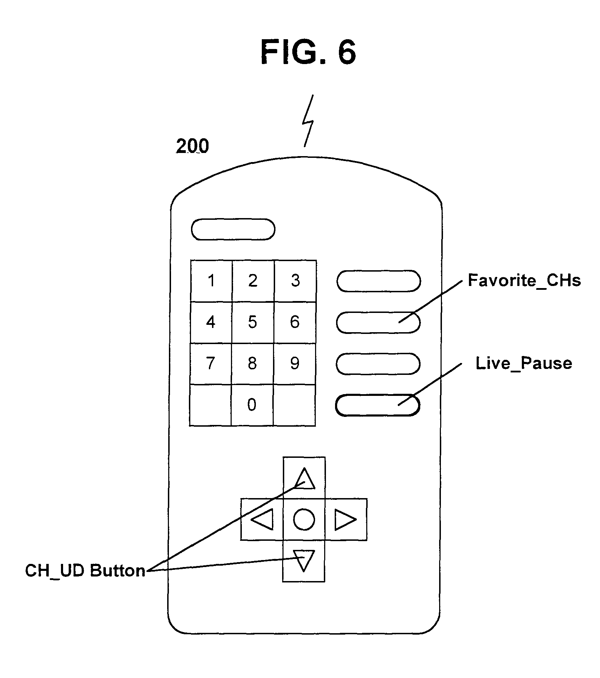

In another embodiment of the present invention, a live-pause button, instead of the live-pause channel up and down buttons shown in Fig. 4, is provided on a remote controller 200 as shown in Fig. 6.

In the embodiment of Fig. 6, if the live-pause button is pressed, the microcomputer 23 performs the operation for displaying the broadcast channel tuned to by the second tuner 27 on the television while recording the broadcast channel tuned to by the first tuner 20 or the time-shift operation, that is the operation from the step S22 to the step S26 of Fig. 5. If the live-pause button is pressed again, the operation of step S22 or S26 is stopped. That is, the live-pause button is toggled to switch between normal and live-pause modes, i.e., to turn the operation from the step S22 to the step S26 on and off.

In the embodiment of Fig. 6, when the live-pause button is pressed once, the favorite channel button "Favorite_CHs" can be used to change the channel of the second tuner 27, and the general channel up and down buttons "CH_UD" can also be used to change the channel of the second tuner 27, which is different from the embodiment of Figs. 4 and 5.

As apparent from the above description, the present invention provides a channel switching method in a broadcast recorder, which has the following advantages. If the user desires to return to a channel providing a desired broadcast program when viewing broadcast programs of other channels, the user can easily resume viewing of the desired broadcast program, without missing any part of the desired broadcast program, which has been received while the user views the broadcast programs of the other channels.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. A method for switching channels in a broadcast recorder, the method comprising the steps of:
a) storing a first broadcast program on a recording medium if a preset button is selected while the first broadcast program is received through a first channel;
b) when channel switching to a second channel is requested, receiving and outputting a second broadcast program of the second channel while continuing to store the first broadcast program on the recording medium; and
c) if the first and second channels are identical, reproducing the first broadcast program stored on the recording medium while continuing to store the first broadcast program being received through the first channel on the recording medium.

2. The channel switching method according to claim 1, wherein the step a) further includes the step of repeatedly outputting, as a still image, the same image of the first broadcast program as that output at the moment when the preset button is selected.

3. The channel switching method according to claim 1, wherein the step a) further includes the step of managing, in a memory, channel number information and playback start position information of the first broadcast program.

4. The channel switching method according to claim 3, wherein it is determined through the comparison of the second channel with a channel number indicated by the channel number information managed in the memory whether or not the first and second channels are identical.

5. The channel switching method according to claim 3, wherein the first broadcast program stored in the recording medium is reproduced, starting from a position of the recording medium indicated by the playback start position information managed in the memory.

6. The channel switching method according to claim 5, wherein the step c) further includes the step of updating the playback start position information during the reproduction of the first broadcast program stored in the recording medium.

7. The channel switching method according to claim 1, further comprising the step of stopping the recording of the first broadcast program on the recording medium if the preset button is selected again.

8. The channel switching method according to claim 7, wherein the channel switching request is performed using a favorite channel button used to tune in to preset favorite channels or using a channel up/down button.

9. The channel switching method according to claim 1, wherein the channel switching request is performed using a favorite channel button used to tune in to preset favorite channels or using the preset button implemented as a channel up/down button.

10. The channel switching method according to claim 9, further comprising the step of stopping the recording of the first broadcast program on the recording medium if a button, other than the preset and favorite channel buttons, is selected.

11. The channel switching method according to claim 1, wherein the broadcast recorder comprises a set-top box, a hard disk recorder, and a plurality of tuners.
